# EUROPÄISCHE PATENTSCHRIFT

(11) **EP 2 254 814 B1**
(45) Veröffentlichungstag und Bekanntmachung des Hinweises auf die Patenterteilung: **24.01.2018**
(21) Anmeldenummer: 09712834.2
(22) Anmeldetag: 06.02.2009
(51) Int. Cl.: B65G 21/20

(54) **ANLAGE ZUM VER- UND/ODER BEARBEITEN VON PACKMITTELN SOWIE VERFAHREN ZUR FORMATGERECHTEN EINSTELLUNG EINER SOLCHEN ANLAGE**
SYSTEM FOR PROCESSING PACKAGING MEANS AND METHOD FOR ADJUSTING SUCH A SYSTEM CORRECTLY FOR A FORMAT
INSTALLATION DE TRANSFORMATION ET/OU DE TRAITEMENT D'EMBALLAGES, ET PROCÉDÉ POUR RÉGLER UNE TELLE INSTALLATION AU FORMAT CORRECT

(30) Priorität: 19.02.2008 DE 102008010076
(43) Veröffentlichungstag der Anmeldung: 01.12.2010
(73) Patentinhaber: KHS GmbH, 44143 Dortmund (DE)
(72) Erfinder: LANGANKI, Dirk, 47661 Issum (DE); WESS, Lothar, 47533 Kleve (DE); KOSTER, Christoph, 47533 Kleve (DE); KOPP, Dirk, 47574 Goch (DE)
(86) Internationale Anmeldenummer: PCT/EP2009/000857
(87) Internationale Veröffentlichungsnummer: WO 2009/103435

(56) Entgegenhaltungen:
- EP-A- 1 773 694
- WO-A-94/12412
- DE-A1- 3 410 685
- DE-A1- 19 803 820
- DE-T2- 60 303 124
- US-A1- 2003 085 104
- US-B1- 6 305 528

## Beschreibung

Die Erfindung bezieht sich auf eine Anlage gemäß dem Oberbegriff des Anspruchs 1 sowie auf ein Verfahren zur Formateinstellung oder -umstellung einer solchen Anlage.

Eine solche Anlage ist z.B. aus der DE 34 10 685 A1 bekannt. Anlagen zum Behandeln und/oder Ver- und/oder Bearbeiten von Packmitteln sind in unterschiedlichster Form bekannt, beispielsweise auch als Reinigungs- und/oder Füll- und/oder Verschließ- und/oder Etikettier- und/oder Verpackungs- und/oder Palletieranlagen.

Packmittel im Sinne der Erfindung sind generell solche zur Aufnahme von Pack- oder Füllaut, beispielsweise Behälter unterschiedlichster Art, wie z. B. Dosen, Flaschen usw. Packmittel im Sinne der Erfindung sind weiterhin auch Packmittelgruppen oder -gebinde, beispielsweise Behältergruppen oder Gebinde aus Behälter unterschiedlichster Art.

Transportstrecke bedeutet im Sinne der Erfindung diejenige Strecke, auf der die Packmittel durch die betreffende Anlage bewegt werden. Zur Transportstrecke gehören somit alle Transporteure beliebiger Ausbildung der jeweiligen Anlage und alle die Packmittel transportierenden Elemente dieser Anlage, d.h. u.a. auch die insbesondere bei Anlagen zum Behandeln von Behältern üblichen Transportsterne beliebiger Ausbildung und deren zugeordnete Elemente (insbesondere Führungsbögen usw.), aber auch umlaufende Transportelemente oder Rotoren von Behandlungsanlagen und/oder Ver- und/oder Bearbeitungsanlagen und/oder Behandlungsanlagen für Packmittel unterschiedlichster Art. Selbstverständlich sind Transportstrecken im Sinne der Erfindung auch andere Transporteure, zum Zu- und Abführen der Packmittel in bzw. aus einer Anlage sowie transportieren der Packmittel zwischen Behandlungsmaschinen einer Anlage.

Speziell in der Getränkeindustrie werden häufig auf einer Anlage Behälter mit unterschiedlichem Format verarbeitet, d.h. Behälter mit unterschiedlichen äußeren Abmessungen, und/oder Formen und/oder unterschiedlicher Art usw. Zusätzlich werden diese unterschiedlichen Behälter auch in unterschiedlichen Verpackungs- oder Gebindearten bzw. -formaten angeboten. Zur Anpassung einer Anlage an diese unterschiedlichen Formate von Behältern, beispielsweise Flaschen, Dosen oder dgl., aber auch zur Anpassung an unterschiedliche Gebindeformate ist es üblich, formatabhängige, mit den Behältern oder Gebinden zusammenwirkende Funktionselemente bzw. Formatteile (z.B. Führungsteile) komplett auszutauschen. Weiterhin ist es üblich und erforderlich, die mit den Behältern oder Gebinden zusammenwirkenden, formatabhängigen Funktionselemente beispielsweise bei einem Formatwechsel formatgerecht einzustellen. Diese Einstellung erfolgt bisher vom Bedienungspersonal von Hand, wobei an einer Vielzahl von Einstellpositionen die Einstellungen manuell durchgeführt werden.

Bei üblichen Anlagen, wie sie in der Getränkeindustrie verwendet werden, sind häufig bei einer Formateinstellung oder -umstellung Einstellungen an bis zu 200 verschiedenen Einstellpositionen erforderlich, was einen erheblichen Arbeits- und auch Zeitaufwand bedeutet, insbesondere dann, wenn eine Vielzahl von Behältern oder Gebinden mit unterschiedlichem Format auf ein und derselben Lage verarbeitet werden sollen. Vielfach werden auf einer Anlage bis zu 30 unterschiedliche Formate bearbeitet.

Zu berücksichtigen ist zusätzlich auch, dass bei jeder Formateinstellung oder - umstellung - ausgehend von der vorhergehenden Einstellung der formatabhängigen Funktionselemente - jeweils wechselnde, also andere Funktionselemente auf neue SOLL-Werte eingestellt werden müssen. Zusätzlich kann es auch noch erforderlich sein, gewechselte Funktionselemente auf andere Einstellwerte einzustellen.

Weiterhin ist auch zu berücksichtigen, dass bei manchen Maschinen, beispielsweise bei Verpackungsmaschinen oder -anlagen bei der Formateinstellung oder-umstellung auch eine vorgegebene Reihenfolge der Einstellungen eingehalten werden muss, um Fehleinstellungen und/oder Beschädigungen der Anlage bzw. deren Maschinen und/oder der Funktionselemente (beispielsweise Führungen) zu vermeiden.

Insgesamt bedingt die Formateinstellung oder -umstellung eine Anlage also bisher wegen der großen Anzahl der Einstellpositionen einen großen Arbeits- und Zeitaufwand mit der Gefahr einer hohen Fehlerquote durch Fehleinstellung. Weiterhin bedingt die Formateinstellung oder -umstellung bisher auch einen erhöhten Kostenaufwand, insbesondere durch einen langen Maschinenstillstand während der Einstellung.

Als weiterer Kostenfaktor werden häufig die sogenannten Anfahrverluste genannt, welche beim Wiederanfahren der Anlage dadurch entstehen, das Packmittel durch fehlerhaft eingestellte Funktionselemente beschädigt oder zerstört werden.

Aufgabe der Erfindung ist es, eine Anlage aufzuzeigen, die die vorgenannten Nachteile vermeidet und eine einfache Formateinstellung oder -umstellung ermöglicht. Zur Lösung dieser Aufgabe ist eine Anlage entsprechend dem Patentanspruch 1 ausgebildet. Ein Verfahren zur formatgerechten Einstellung einer Anlage ist Gegenstand des Patentanspruches 9. Die Erfindung ermöglicht eine schnelle, insbesondere aber auch vereinfachte und sichere Formateinstellung oder -umstellung.

Weiterbildungen der Erfindung sind Gegenstand der Unteransprüche.

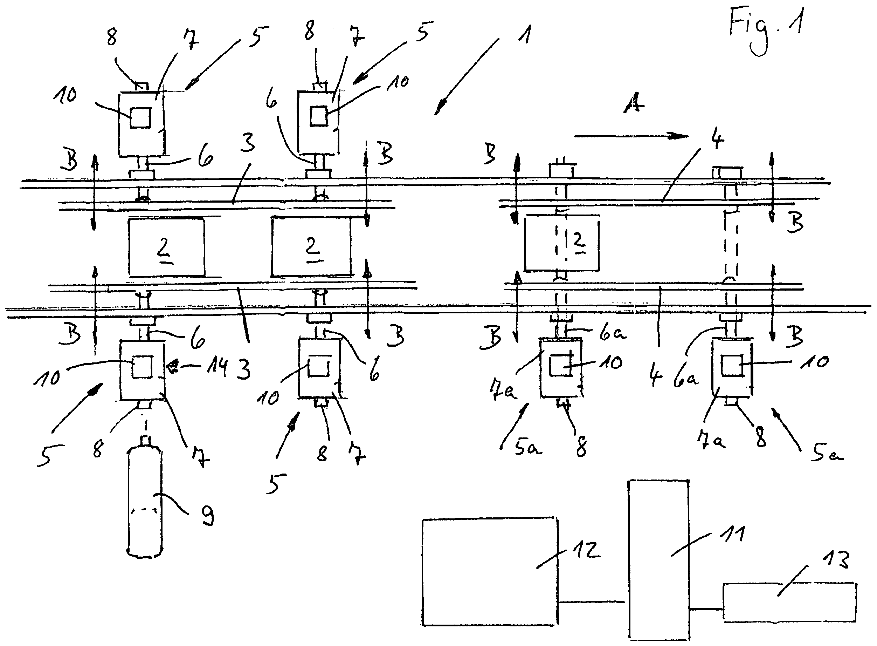

Weiterbildungen, Vorteile und Anwendungsmöglichkeiten der Erfindung ergeben sich auch aus der nachfolgenden Beschreibung von Ausführungsbeispielen und aus der Figur.

Die Erfindung wird im Folgenden anhand der Figur, die in sehr vereinfachter Darstellung und Draufsicht einen Teilanschnitt einer Transportstrecke 1 für Packmitteln 2 zeigt, näher erläutert. Die Packmittel 2, die ebenfalls nur sehr schematisch als Block dargestellt sind, sind beispielsweise Behälter unterschiedlichster Art, wie z.B. Dosen, Flaschen usw. Packmittel 2 sind aber auch Behältergruppen oder Gebinden aus Behältern unterschiedlichster Art.

Die Transportstrecke 1, auf der die Packmittel 2 in einer horizontalen Transportrichtung A bewegt werden, ist Bestandteil einer ansonsten nicht dargestellten Behandlungsanlage oder Ver- und/oder Bearbeitungsanlage für die Packmittel 2, beispielsweise einer Reinigungs- und/oder Füll- und/oder Verschließ- und/oder Etikettier- und/oder Verpackungs- und/oder Palletieranlage mit einer dem Fachmann grundsätzlich bekannten Ausbildung.

Die Transportstrecke 1 weist u.a. mit den Packmitteln 2 zumindest hinsichtlich ihrer Positionierung zusammenwirkende formatabhängige Funktionselemente auf, die für ein ordnungsgemäßes und störungsfreies Arbeiten der Transportstrecke 1 formatabhängig, d.h. z.B. abhängig von der Art und/oder Form und/oder Größe, insbesondere auch von den Abmessungen, die die Packmittel 2 in Transportrichtung A oder aber quer hierzu aufweisen, ausgetauscht und/oder formatgerecht eingestellt werden müssen. In der Figur sind als solche formatabhängige, mit den Packmitteln 2 zusammenwirkende Funktionselemente beispielhaft als Führungselemente 3 und 4 dargestellt, die die Transportstrecke 1 seitlich begrenzen und deren gegenseitiger Abstand jeweils formatgerecht, d.h. in diesem Fall auf die Breite eingestellt werden muss, die die Packmittel 2 quer zur Transportrichtung A aufweisen, wie dies mit den Doppelpfeilen B in der Figur angedeutet ist. Die Führungselemente 3 und 4 sind weiterhin austauschbar vorgesehen, und zwar ebenfalls zur Anpassung an die Art und/oder Größe der verarbeiteten Packmittel 2.

Selbstverständlich können die einzustellenden formatabhängigen Funktionselemente an der Transportstrecke 1 oder innerhalb der Gesamtanlage nicht nur seitliche Führungselemente, sondern auch andere mit den Packmitteln 2 zusammenwirkende Elemente sein, z.B. Führungsbögen an Ein- und Auslaufsternen von Behandlungsmaschinen oder -aggregaten, Elemente zum Aufteilen und/oder Zusammenführen eines Packmittelstromes usw. Weiterhin bedeutet eine formatgerechte Einstellung nicht nur eine Einstellung von Abständen, sondern jede beliebige für die Einrichtung und/oder Umstellung der Anlage auf ein Packmittelformat notwendige Einstellung, z.B. Änderung der Höhenlage und/oder des Verlaufs und/oder der Krümmung von Führungen usw.

Die formatabhängige Einstellung der Führungselemente 3 erfolgt über mehrere Verstellvorrichtungen 5, die für jedes Führungselement 3 seitlich an der Transportstrecke 1 in Transportrichtung A gegeneinander versetzt vorgesehen und von denen der einfacheren Darstellung wegen nur zwei gezeigt sind. Jede Verstellvorrichtung 5 besteht beispielsweise im Wesentlichen aus einem Verstellglied 6, welches bei der dargestellten Ausführungsform eine mit ihrer Achse horizontal und senkrecht zur Transportrichtung A orientierte und in einem Muttergewinde am Transporteur 1 geführten Gewindespindel ist, sowie aus einem Antrieb 7 (Antriebsblock) für das Verstellglied 6, d.h. zum Drehen der das Verstellgliedes 6 bildenden Gewindespindel. An dem jeweiligen Antrieb 7, der auch mit einer Handkurbel versehen sein kann, bzw. an eine Kupplung 8 des Antriebs 7 ist ein mit einem Motor ausgestattetes mobiles Verstellgerät 9 temporär ankuppelbar, über das nach dem Ankuppeln das Verstellglied 6 für die Einstellung des zugehörigen Führungselementes 3 motorisch betätigt werden kann. Das mobile Verstellgerät 9 ist bevorzugt ein Handgerät mit einem batterie- oder akkubetriebenen Elektromotor.

Während für die beiden beidseitig der Transportstrecke 1 angeordneten Führungselemente 3 jeweils gesonderte Verstellvorrichtungen 5 vorgesehen sind, sind die Verstellvorrichtungen 5a für die beiden beidseitig der Transportstrecke 1 vorgesehenen Führungselemente 4 jeweils nur an einer Seite dieser Transportstrecke 1 angeordnet. Jede Verstellvorrichtung 5a besteht wiederum u.a. aus einem Verstellglied 6a und einem Antrieb 7a mit Kupplung 8 zum Ankuppeln des Verstellgerätes 9. Das Verstellglied 6a ist hierbei beispielsweise in Form einer Gewindespindel mit gegenläufigen Gewindegängen derart ausgebildet, dass über dieses Verstellglied 6a ein symmetrisches oder im Wesentlichen symmetrisches Verstellen der Führungselemente 4 relativ zu einer vertikalen Mittelebene des Transporteurs 1 möglich ist.

Die Führungselemente 3 und 4 sind jeweils lösbar an den Verstellgliedern 6 bzw. 6a vorgesehen, sodass sie gegebenenfalls gegen andere Führungselemente ausgetauscht werden können, sofern dies für einen Formatwechsel erforderlich ist.

Jede Einstellvorrichtung 5 und 5a definiert eine Einstellposition, die innerhalb der Gesamtanlage durch eine eigenständige Kennung oder Identifikation, beispielsweise durch eine Identifikationsnummer eindeutig gekennzeichnet ist.

An jedem Antrieb 7 und 7a ist beispielsweise ein Display 10 vorgesehen, an welchem u.a. die jeweils aktuelle Einstellung der Verstellvorrichtung 5 bzw. 5a und damit des Führungselementes 3 bzw. 4 als IST-Wert angezeigt wird. Weiterhin kann auch der SOLL-Wert der Einstellung angezeigt werden.

Vorgesehen ist weiterhin eine zentrale Steuereinheit 11, und zwar in Form eines Rechners, dem u.a. ein Anzeigedisplay in Form eines Bildschirms 12 und eine Eingabetastatur 13 zugeordnet sind. In einem Speicher der Steuereinheit 11 sind u.a. die für unterschiedliche Packmittelformate an den einzelnen Einstellpositionen erforderlichen Einstellungen bzw. deren Daten als SOLL-Werte gespeichert, beispielsweise datenbankmäßig oder tabellarisch, und zwar gesondert für jede Einstellposition. Weiterhin sind im Speicher der Steuereinheit 11 u.a. auch die für das jeweilige Packmittelformat erforderlichen, mit den Packmitteln 2 zusammenwirkenden Funktionselemente abgelegt

Bei der Einstellung und/oder Umstellung der Anlage, beispielsweise der Transportstrecke 1 auf ein neues Packmittelformat kann das mit der Formatumstellung beauftragte Bedienungspersonal die entsprechenden Daten aus dem Speicher der Steuereinheit 11 abrufen, sodass diese Daten, d.h. die erforderlichen formatgerechten mit den Packmitteln 2 zusammenwirkenden Funktionselemente und die erforderlichen formatgerechten Einstellungen auf dem Bildschirm 12 angezeigt werden, und zwar für jede Einstellposition. Mit diesen angezeigten Werten können dann die Einstellungen der verschiedenen Verstellvorrichtungen 5 bzw. 5a auf den formatgerechten SOLL-Wert unter Beachtung der Anzeige des jeweiligen Displays 10 manuell oder aber bevorzugt mit dem Verstellgerät 9 durchgeführt werden.

Auf dem Bildschirm 12 werden dabei bevorzugt nicht nur die einzelnen Einstellpositionen und die dortigen Einstell- bzw. SOLL-Werte angezeigt, sondern am Bildschirm 12 wird bevorzugt auch die Reihenfolge angezeigt, in der das Einstellen an den Einstellpositionen vorgenommen werden soll, um so das Bedienungspersonal visuell und schrittweise bei der Einstellung bzw. Formateinstellung oder -umstellung zu unterstützen und auch eventuelle Fehleinstellungen zu vermeiden.

Zur Unterstützung des Bedienungspersonals kann die Anlage weiterhin so ausgeführt sein, dass die Einstellpositionen, an denen eine Einstellung notwendig ist, auf einer am Bildschirm 12 wiedergegebenen Graphik und/oder durch ein akustisches Signal und/oder ein Lichtsignal unmittelbar an der jeweiligen Einstellposition angezeigt werden, beispielsweise an dem dortigen Antrieb 7 oder 7a, wie dies in der Figur mit 14 angedeutet ist. Jede Anzeige 14 ist beispielsweise so ausgebildet, dass sie selbsttätig abgeschaltet wird, nachdem die Einstellung vorgenommen wurde. Das Abschalten der jeweiligen Anzeige 14 erfolgt dann durch das Zusammenwirken des mobilen Verstellgerätes 9 mit dem jeweiligen Antrieb 7 bzw. 7a, beispielsweise beim Andocken des Verstellgerätes 9 an diesen Antrieb. Bevorzugt erfolgt die Darstellung der Einstellpositionen, an denen eine Einstellung erforderlich ist, auf dem Bildschirm 12 und/oder das Aktivieren der Anzeigen 14 an den Einstellpositionen jeweils zeitlich nacheinander, und zwar in der Weise, dass nach erfolgter Einstellung an einer Einstellposition auf dem Bildschirm 12 die nächstfolgende Einstellposition, an der eine Einstellung notwendig ist, angezeigt wird und/oder die Anzeige 14 an der nächstfolgenden Einstellposition aktiviert wird, sodass das Bedienungspersonal die Einstellung der Anlage geführt durch die Steuereinrichtung 11 ausführen kann. Erfindungsgemäß ist aber die Anlage weiterhin so ausgebildet, dass auch das Verstellen an den einzelnen Einstellpositionen bzw. Verstellvorrichtungen 5 und 5a selbsttätig bzw. rechnergesteuert erfolgt, und zwar generell in der Weise, dass nach dem Ansetzen bzw. Ankuppeln des Verstellgerätes 9 an einen Antrieb 7 bzw. 7a und gegebenenfalls nach einem dann erfolgenden Aktivieren des Verstellgerätes 9 das Verstellglied 6 bzw. 6a in der Weise betätigt wird, dass automatisch die für die jeweilige Einstellposition erforderliche Solleinstellung bzw. Einstellung auf den SOLL-Wert motorisch erfolgt. Die Werte für die Solleinstellung werden den einzelnen Einstellpositionen bzw. den dortigen Antrieben 7 bzw. 7a von der zentralen Steuereinrichtung 11 übermittelt. Die Antriebe 7 bzw. 7a sind hierfür mit einer ausreichenden elektronischen Intelligenz ausgestattet, beispielsweise in Form einer mikroprozessorgestützten Steuerelektronik oder Steuereinrichtung, der u.a. die SOLL-Werte für die jeweilige formatgerechte Einstellung von der zentralen Steuereinheit 11 über eine geeignete Datenübertragungsstrecke, beispielsweise über eine drahtlose Datenübertragungsstrecke oder eine Bus-Struktur übermittelt werden und die durch Vergleich dieser SOLLWerten mit der aktuellen Einstellung des jeweiligen Verstellgliedes 6 bzw. 6a (IST-Wert) im Zusammenwirken mit dem angekuppelten Verstellgerät 9 die formatgerechte Einstellung und das Abschalten des Gerätes 9 nach Erreichen dieser Einstellung bewirkt. Das hierfür notwendige Zusammenwirken des jeweiligen Antriebs 7 bzw. 7a mit dem Verstellgerät 9 erfolgt beispielsweise drahtlos über eine vorzugsweise für einen bidirektionalen Datenverkehr ausgebildete Übertragungsstrecke, beispielsweise über eine Übertragungsstrecke mit Infrarot-Schnittstellen an den Antrieben 7 bzw. 7a und an dem Verstellgerät 9. Auch andere Kommunikationswege zwischen dem jeweiligen Antrieb 7 bzw. 7a und dem Verstellgerät 9 sind möglich. Inhalt der Kommunikation zwischen dem Antrieb 7 bzw. 7a und dem angekoppelten Verstellgerät 9 ist erfindungsgemäß die Drehrichtung und vorzugsweise die Drehzahl und/oder der Gesamtdreh- oder Verstellwinkel.

Nach dem Verstellen einer jeden Verstellvorrichtung 5 bzw. 5a erfolgt eine Rückmeldung an die zentrale Steuereinheit 11, um beispielsweise die nächstfolgende Einstellposition zu ermitteln und anzuzeigen und/oder dem Bedienungspersonal mitzuteilen oder zu signalisieren, dass die jeweils vorgenommene Einstellung ordnungsgemäße ausgeführt wurde. Hierbei besteht grundsätzlich auch die Möglichkeit, die Abfolge für Einstellung so auszugestalten, dass nach einer vorgenommenen Einstellung diese dem Bedienungspersonal am Bildschirm 12 angezeigt und von dem Bedienungspersonal durch entsprechende Eingabe beispielsweise an der Eingabetastatur 13 bestätigt werden oder aber vom Bedienungspersonal eine Korrektur der getroffenen Einstellung vorgenommen werden muss, bevor die Einstellung an einer weiteren Einstellposition erfolgen kann.

Grundsätzlich besteht aber auch die nicht erfindungsgemäße Möglichkeit, das Verstellgerät 9 mit einer höheren elektronischen Intelligenz auszugestalten, und zwar in der Weise, dass die für eine Format Ein- oder Umstellung notwendigen Solleinstellungen für jede Einstellposition bzw. für jede Verstellvorrichtung 5 bzw. 5a in einem Speicher des Verstellgerätes 9 abgelegt sind und dass beim Ankuppeln des Verstellgerätes 7 an die jeweilige Einstellposition bzw. an die dortige Verstellvorrichtung 5 bzw. 5a über eine Datenübertragungsstrecke zwischen dieser Einstellposition und dem Verstellgerät 9 zunächst die Identifikation der Einstellposition und deren aktueller Zustand als IST-Wert an das angedockte Verstellgerät 9 übertragen werden und dieses Gerät dann unter Berücksichtigung dieser Werte und des SOLL-Wertes die Einstellung des mit den Packmitteln zusammenwirkenden Funktionselementes, beispielsweise des Führungselementes 3 bzw. 4 auf die Sollposition vornimmt, wobei bei dieser Einstellung ein ständiger Vergleich zwischen dem SOLL-Wert und dem jeweils aktuellen IST-Wert erfolgt. Die Datenübertragung zwischen der jeweiligen Einstellposition und dem Verstellgerät 9 erfolgt wiederum über eine drahtlose, beispielsweise für einen bidirektionalen Datenverkehr ausgebildete Datenstrecke, beispielsweise unter Verwendung von Infrarot-Schnittstellen. Zur Identifikation der jeweiligen Einstellposition kann beispielsweise ein an der jeweiligen Einstellposition vorgesehener RFID-Chip, in dem die Identifikation der Einstellposition gespeichert ist, und eine mit diesem Chip zusammenwirkende Leseeinheit am Verstellgerät 9 verwendet werden.

Eine weitere, nicht erfindungsgemäße Möglichkeit zur automatischen Steuerung der formatgerechten Einstellung besteht darin, dass über die Datenverbindung zwischen den Antrieben 7 und 7a und der zentralen Steuereinheit 11 die jeweils aktuelle Position oder -Einstellung jeder Verstellvorrichtung 5 bzw. 5a als IST-Wert an die zentrale Steuereinheit 11 übertragen wird, und dass über eine weitere Verbindung, beispielsweise über eine drahtlose Verbindung das jeweils an einen Antrieb 7 oder 7a angekoppelte Verstellgerät 9 in Abhängigkeit von dem an die Steuereinheit 11 übertragenden IST-Wert und dem in der Steuereinheit 11 für die entsprechende Einstellposition abgelegten SOLL-Wert derart gesteuert wird, dass ein Abschalten des Verstellgerätes 9 dann erfolgt, wenn der übertragene IST-Wert dem SOLL-Wert entspricht. In Abwandlung hiervon ist es auch möglich, die Antriebe 7 und 7a jeweils so auszubilden, dass dann, wenn der SOLL-Wert der Einstellung erreicht ist, im Antrieb 7 oder 7a eine Unterbrechung der antriebsmäßigen Verbindung zwischen der Kupplung 8 und dem Verstellglied 6 bzw. 6a erfolgt.

Die Erfindung wurde voranstehend an Ausführungsbeispielen beschrieben. Es versteht sich, dass Änderungen sowie Abwandlungen möglich sind, ohne dass dadurch der der Erfindung zugrunde liegende Erfindungsgedanke verlassen wird.

### Bezugszeichenliste

- 1: Transportstrecke
- 2: Packmittel
- 3, 4: Führungselemente
- 5, 5a: Verstellvorrichtung
- 6, 6a: Verstellglied
- 7, 7a: Antrieb bzw. Betätigungseinrichtung für das Verstellglied 6 bzw. 6a
- 8: Kupplung
- 9: Verstellgerät
- 10: Anzeige oder Display
- 11: zentrale Steuereinrichtung
- 12: Bildschirm
- 13: Eingabetastatur
- 14: Anzeige
- A: Transportrichtung
- B: Verstellung

## Patentansprüche

1. Anlage zum Behandeln und/oder Ver- und/oder Bearbeiten von Packmitteln, die auf einer Transportstrecke (1) durch die Anlage bewegt werden, mit mehreren an dieser Transportstrecke vorgesehenen, mit den Packmitteln (2) zusammenwirkenden formatabhängigen Funktionselementen (3, 4) sowie mit an Einstellpositionen der Anlage vorgesehenen Verstellvorrichtungen (5, 5a) für eine formatgerechte Einstellung der mit den Packmitteln (2) zusammenwirkenden formatabhängigen Funktionselemente (3, 4), mit einer zentralen Steuereinheit (11), in der für unterschiedliche Packmittelformate zumindest die an den Einstellpositionen erforderlichen formatgerechten Einstellungen in einem Speichermedium als Einstelldaten oder SOLL-Werte abgelegt sind und die diese Daten für eine Formateinstellung und/oder Umstellung der Anlage bereitstellt, und mit wenigstens einem mobilem, einen motorischen Antrieb aufweisenden Verstellgerät (9), welches für eine motorische, formatgerechte Einstellung der formatabhängigen Funktionselemente (3,4) an die Verstellvorrichtungen (5, 5a) dieser Funktionselemente (3, 4) durch Ansetzen durch das Bedienungspersonal ankuppelbar ist, **dadurch gekennzeichnet, dass** die Einstellpositionen oder die dortigen Verstellvorrichtungen (5, 5a) oder eine Gruppe von Einstellpositionen oder Einstellvorrichtungen (5a) jeweils mit einer Steuerelektronik versehen sind, von denen jede über eine Datenübertragungsstrecke, beispielsweise über eine Busstruktur oder eine drahtlose Datenübertragungsstrecke mit der zentralen Steuereinheit (11) verbunden ist, dass an den Einstellpositionen bzw. an den dortigen Verstellvorrichtungen (5, 5a) Mittel zur Erfassung der Ist-Position oder-Einstellung der Verstellvorrichtung (5, 5a) bzw. des zugehörigen formatabhängigen Funktionselementes als IST-Wert vorgesehen sind, und dass der Steuerelektronik jeder Einstellposition die für die jeweilige formatgerechte Einstellung (Solleinstellung) erforderlichen Einstelldaten als SOLL-Wert übermittelt werden, und dass die jeweilige Steuerelektronik unter Berücksichtigung dieses Soll-Wertes und der tatsächlich vorliegenden Ist-Position oder-Einstellung (IST-Wert) der betreffenden Einstellpositionen oder Ihrer Verstellvorrichtung (5, 5a) die Drehrichtung des angekoppelten Verstellgerätes (9), steuert und bei Übereinstimmung zwischen dem SOLL-Wert und dem IST-Wert die Einstellung beendet, beispielsweise das Verstellgerät (9) abschaltet oder die antriebsmäßige Verbindung zu dem Verstellgerät unterbricht.

2. Anlage nach Anspruch 1, **dadurch gekennzeichnet, dass** das Verstellgerät (9) ein batterie- oder akkubetriebenes Gerät ist.

3. Anlage nach Anspruch 1 oder 2, **dadurch gekennzeichnet, dass** an den Einstellpositionen bzw. an den Verstellvorrichtungen (5, 5a) Mittel (10) zur optischen Anzeige zumindest der jeweiligen Ist-Position oder -Einstellung der betreffenden Verstellvorrichtung (5, 5a) oder des zugehörigen formatabhängigen Funktionselementes (3, 4) vorgesehen sind.

4. Anlage nach einem der vorhergehenden Ansprüche, **dadurch gekennzeichnet, dass** die zentrale Steuereinheit (11) wenigstens einen Bildschirm (12) zur Anzeige der an den einzelnen Einstellungspositionen bzw. an den dortigen Verstellvorrichtungen (5, 5a) vorzunehmenden und/oder vorgenommenen formatgerechten Einstellungen aufweist.

5. Anlage nach Anspruch 4, **dadurch gekennzeichnet, dass** der wenigstens eine Bildschirm (12) der zentralen Steuereinheit (11) für eine Anzeige derjenigen Einstellpositionen ausgebildet ist, die bei einer Formateinstellung und/oder - umstellung eingestellt werden müssen.

6. Anlage nach einem der vorhergehenden Ansprüche, **dadurch gekennzeichnet, dass** die Anlage an den Einstellpositionen oder an den dortigen Verstellvorrichtungen (5, 5b) optische und/oder akustische Anzeigen (14) aufweist, die von der zentralen Steuereinheit (11) für das Anzeigen derjenigen Einstellpositionen aktivierbar sind an denen eine Einstellung erforderlich ist.

7. Anlage nach einem der vorhergehenden Ansprüche, **dadurch gekennzeichnet, dass** der Steuerelektronik des Verstellgerätes (9) die Einstelldaten als SOLL-Wert über eine Datenübertragungsstrecke, beispielsweise über eine drahtlose Datenübertragungsstrecke von der zentrale Steuereinheit (11) übermittelt werden und/oder dass das Verstellgerät (9) eine Schnittstelle zum Anschließen an die zentrale Steuereinheit (11) für ein Einlesen der Einstelldaten in die Steuerelektronik aufweist.

8. Anlage nach einem der vorhergehenden Ansprüche, **dadurch gekennzeichnet, dass** das Verstellgerät (9) ein handgeführtes Gerät ist.

9. Verfahren zur Formateinstellung oder -umstellung einer Anlage zum Behandeln und/oder Ver- und/oder Bearbeiten von Packmitteln (2) nach einem der vorhergehenden Ansprüche, wobei die für unterschiedliche Packmittelformate zumindest die an den Einstellpositionen erforderlichen formatgerechten Einstellungen in dem Speichermedium der zentralen Steuereinheit (11) als Einstelldaten oder Sollwerte abgelegt sind, wobei die zentrale Steuereinheit (11) diese Daten für eine Formateinstellung und/oder - umstellung bereitstellt, wobei die formatgerechte Einstellung der formatabhängigen Funktionselemente (3, 4) an den Verstellvorrichtungen (5, 5a) durch das durch Ansetzen durch das Bedienpersonal an diese Verstellvorrichtungen ankuppelbare mobile und den motorischen Antrieb aufweisende Verstellgerät (9) erfolgt, wobei die jeweilige formatgerechte Einstellung durch die an der jeweiligen Einstellposition oder aber an der Gruppe von Einstellpositionen vorgesehenen Steuerelektronik unter Berücksichtigung des IST-Wertes der aktuellen Einstellung und des für die betreffende Einstellposition in der Steuereinheit abgelegten SOLL-Wertes erfolgt.

10. Verfahren nach Anspruch 9 **dadurch gekennzeichnet, dass** die zentrale Steuereinheit (11) die Reihenfolge, in der die formatgerechte Einstellung an den Einstellpositionen vorgenommen wird oder vorzunehmen ist, vorgibt und/oder eine Anzeige dieser Reihenfolge bewirkt.

11. Verfahren nach Anspruch 10, **dadurch gekennzeichnet, dass** die zentrale Steuereinheit (11) zur Anzeige der Reihenfolge der Einstellungen Anzeigen (14) an den Einstellpositionen aktiviert.

12. Verfahren nach einem der vorhergehenden Ansprüche 9-11, **gekennzeichnet durch** die Verwendung eines Verstellgerätes (9) in Form eines batterie- oder akkubetriebenen Handgerätes.

## Claims

1. System for handling and/or preparing and/or processing of packing means, which are moved on a transport path (1) through the system, having a plurality of format-dependent functional elements (3, 4) provided on this transport path working together with the packaging means (2), and adjusting devices (5, 5a) provided at adjusting positions of the system for adjusting the format-dependent functional elements (3, 4) working together with the packaging means(2) correctly for a format, with a central control unit (11), stored in which, for different packaging means formats, are at least the format-dependent settings required at the adjusting positions for the different packaging means formats, in a storage medium as adjustment setting data or REFERENCE values, and which provides this data for a format change and/or resetting of the system, and with at least one mobile adjustment device (9) comprising a motorised drive, which, for a motorised format-correct adjustment of the format-dependent function elements (3, 4), can be coupled to the adjusting devices (5, 5a) of these function elements (3, 4) by actuation by the operating personnel, **characterised in that**
the adjusting positions or the adjusting devices (5, 5a) located there, or a group of adjusting positions or adjusting devices (5a) are in each case provided with a control electronics device, each of which is connected by means of a data transfer link, for example by means of a bus structure or a wireless data transfer connection, to the central control unit (11), that provided at the adjusting positions, or the adjusting devices (5, 5a) located there, are means for detecting the actual position or adjustment of the adjusting device (5, 5a), or of the format-dependent function element belonging to the adjusting device, as an ACTUAL value, and that the adjusting data required for the respective format-correct adjustment (reference adjustment) is sent to the control electronics device of each adjusting position as a REFERENCE value, and that the respective control electronics device, taking account of this Reference value and of the Actual value or adjustment which is in fact present (ACTUAL value) of the adjusting positions concerned or of their adjusting device (5, 5a), controls the direction of rotation of the adjusting device (9) coupled to it, and, if there is coincidence between the REFERENCE value and the ACTUAL value, ends the adjustment, for example by switching the adjusting device (9) or interrupting the drive connection to the adjusting device.

2. System according to claim 1, **characterised in that** the adjusting device (9) is battery-operated or accumulator-operated device.

3. System according to claim 1 or 2, **characterised in that** means (10) are provided at the adjusting positions or at the adjusting devices (5, 5a) for the optical display of the respective Actual position or adjustment of the adjusting device (5, 5a) concerned, or of the format-dependent function element (3, 4) belonging to it.

4. System according to any one of the preceding claims, **characterised in that** the central control unit (11) comprises at least one display screen (12) for displaying the format-correct adjustments to be carried out and/or already carried out at the individual adjusting positions or the adjusting devices (5, 5a) located there.

5. System according to claim 4, **characterised in that** the at least one display screen (12) of the central control unit (11) is configured for a display of those adjusting positions which must be adjusted in the event of a format adjustment and/or conversion.

6. System according to any one of the preceding claims, **characterised in that** the system comprises, at the adjusting positions or at the adjusting devices (5, 5b) located there, optical or acoustic displays (14), which can be activated by the central control unit (11) for displaying those adjusting positions at which an adjustment is necessary.

7. System according to any one of the preceding claims, **characterised in that** the adjusting data is transferred to the control electronics device of the adjusting device (9) as a REFERENCE value via a data transfer link, for example via a wireless transfer link, from the central control unit (11), and/or that the adjusting device (9) comprises an interface for connecting to the central control unit (11) for reading the adjusting data into the control electronics device.

8. System according to any one of the preceding claims, **characterised in that** the adjusting device (9) is a manually-guided device.

9. Method for format adjusting or converting of a system for handling and/or preparing and/or processing of packing means (2) according to one of the preceding claims, wherein at least the format-correct adjustments required at the adjusting positions for different packaging means formats are deposited in the storage medium of the central control unit (11) as adjusting data or Reference values, wherein the central control unit (11) then provides this data for a format adjustment and/or conversion, wherein the format-correct adjustment of the format-dependent function elements (3, 4) takes place at the adjusting devices (5, 5a) by the mobile adjusting device (9), comprising a motor drive, which can be coupled to these adjusting devices by actuation by the operating personnel, wherein the respective format-correct adjustment is carried out by the control electronics device provided at the respective adjusting position or at the group of adjusting positions, taking account of the ACTUAL value of the present adjustment and of the REFERENCE value deposited in the control unit for the adjusting position concerned.

10. Method according to claim 9, **characterised in that** the central control unit (11) determines the sequence in which the format-correct adjustment is being carried out or is to be carried out at the adjusting positions, and/or provides a display of this sequence.

11. Method according to claim 10, **characterised in that** the central control unit (11) activates displays (14) at the adjusting positions, in order to display the sequence of the adjustments.

12. Method according to any one of the preceding claims 9-11, **characterised by** the use of an adjusting device (9) in the form of a manually operated device which is battery-operated or accumulator-operated.

## Revendications

1. Installation servant à traiter et/ou à transformer et/ou à usiner des emballages, qui sont déplacés sur une ligne de transport (1) à travers l'installation, comprenant plusieurs éléments fonctionnels (3, 4) dépendants du format prévus au niveau de ladite ligne de transport, coopérant avec les emballages (2) et comprenant également des dispositifs d'ajustement (5, 5a) prévus au niveau de positions de réglage de l'installation pour un réglage conforme au format des éléments fonctionnels (3, 4) dépendant du format coopérant avec les emballages (2), comprenant une unité de commande (11) centrale, dans laquelle au moins les réglages conformes au format requis au niveau des positions de réglage sont enregistrés pour des formats d'emballage différents dans un support de stockage en tant que données de réglage ou valeurs de consigne et laquelle fournit lesdites données pour un réglage de format et/ou une reconfiguration de l'installation, et
comprenant au moins un appareil d'ajustement (9) mobile, présentant un entraînement motorisé, lequel appareil d'ajustement peut être accouplé aux dispositifs d'ajustement (5, 5a) desdits éléments fonctionnels (3,4) par une mise en place par le personnel exploitant en vue d'un réglage motorisé, conforme au format des éléments fonctionnels (3, 4) dépendant du format,
**caractérisée en ce que**
les positions de réglage ou les dispositifs d'ajustement (5, 5a) situés à cet endroit ou un groupe de positions de réglage ou de dispositifs de réglage (5a) sont pourvus respectivement d'une électronique de commande, dont chacune est reliée à l'unité de commande (11) centrale par l'intermédiaire d'une ligne de transmission de données, par exemple par l'intermédiaire d'une structure de bus ou d'une ligne de transmission de données sans fil, que des moyens servant à détecter la position réelle ou le réglage réel du dispositif d'ajustement (5, 5a) ou de l'élément fonctionnel dépendant du format associé en tant que valeur réelle sont prévus au niveau des positions de réglage ou des dispositifs d'ajustement (5, 5a) situés à cet endroit, et que les données de réglage requises pour le réglage respectif conforme au format (réglage de consigne) sont transférées en tant que valeurs de consigne à l'électronique de commande de chaque position de réglage, et que l'électronique de commande respective commande la direction de rotation de l'appareil d'ajustement (9) accouplé en tenant compte de ladite valeur de consigne ou de la position réelle ou du réglage réel de mise effectivement (valeur réelle) des positions de réglage concernées ou de leur dispositif d'ajustement (5, 5a) et met un terme au réglage en cas de coïncidence entre la valeur de consigne et la valeur réelle, par exemple met hors service l'appareil d'ajustement (9) ou interrompt la liaison par entraînement avec l'appareil d'ajustement.

2. Installation selon la revendication 1, **caractérisée en ce que** l'appareil d'ajustement (9) est un appareil fonctionnant avec des piles ou des accus.

3. Installation selon la revendication 1 ou 2, **caractérisée en ce que** des moyens (10) servant à afficher de manière optique au moins la position réelle respective ou le réglage réel respectif du dispositif d'ajustement (5, 5a) concerné ou de l'élément fonctionnel (3, 4) dépendant du format associé sont prévus au niveau des positions de réglage ou au niveau des dispositifs d'ajustement (5, 5a).

4. Installation selon l'une quelconque des revendications précédentes, **caractérisée en ce que** l'unité de commande (11) centrale présente au moins un écran (12) servant à afficher les réglages conformes au format à effectuer et/ou effectués au niveau des positions de réglage individuelles ou au niveau des dispositifs d'ajustement (5, 5a) situés à cet endroit.

5. Installation selon la revendication 4, **caractérisée en ce que** l'au moins un écran (12) de l'unité de commande (11) centrale est réalisé en vue d'un affichage des positions de réglage, qui précisément doivent être réglées dans le cas d'un réglage de format et/ou de reconfiguration de format.

6. Installation selon l'une quelconque des revendications précédentes, **caractérisée en ce que** l'installation présente, au niveau des positions de réglage ou au niveau des dispositifs d'ajustement (5, 5b) situés à cet endroit, des affichages optiques et/ou acoustiques (14), qui peuvent être activés par l'unité de commande (11) centrale en vue de l'affichage des positions de réglage, au niveau desquelles précisément un réglage est requis.

7. Installation selon l'une quelconque des revendications précédentes, **caractérisée en ce que** les données de réglage sont transférées en tant que valeurs de consigne par l'unité de commande (11) centrale à l'électronique de commande de l'appareil d'ajustement (9) par l'intermédiaire d'une ligne de transmission de données, par exemple par l'intermédiaire d'une ligne de transmission de données sans fil, et/ou **en ce que** l'appareil d'ajustement (9) présente une interface destinée à être raccordée à l'unité de commande (11) centrale en vue d'une lecture des données de réglage dans l'électronique de commande.

8. Installation selon l'une quelconque des revendications précédentes, **caractérisée en ce que** l'appareil d'ajustement (9) est un appareil à guidage manuel.

9. Procédé servant au réglage ou à la reconfiguration de format d'une installation servant à traiter et/ou à transformer et/ou à usiner des emballages (2) selon l'une quelconque des revendications précédentes, dans lequel au moins les réglages conformes au format requis au niveau des positions de réglage sont enregistrés en tant que données de réglage ou valeurs de consigne pour différents formats d'emballage dans le support de stockage de l'unité de commande (11) centrale, dans lequel l'unité de commande (11) centrale fournit lesdites données en vue d'un réglage et/ou d'une reconfiguration de format, dans lequel le réglage conforme au format des éléments fonctionnels (3, 4) dépendant du format est effectué au niveau des dispositifs d'ajustement (5, 5a) par l'appareil d'ajustement (9) mobile pouvant être accouplé auxdits dispositifs d'ajustement par une mise en place par le personnel exploitant et présentant l'entraînement motorisé, dans lequel le réglage respectif conforme au format est effectué par l'électronique de commande prévue au niveau de la position de réglage respective ou néanmoins au niveau du groupe de positions de réglage en tenant compte de la valeur réelle du réglage instantané et de la valeur de consigne enregistrée dans l'unité de commande pour la position de réglage concernée.

10. Procédé selon la revendication 9, **caractérisé en ce que** l'unité de commande (11) centrale spécifie l'ordre, dans lequel le réglage conforme au format est réalisé ou doit être réalisé au niveau des positions de réglage et/ou provoque un affichage dudit ordre.

11. Procédé selon la revendication 10, **caractérisé en ce que** l'unité de commande (11) centrale active des affichages (14) au niveau des positions de réglage aux fins de l'affichage de l'ordre des réglages.

12. Procédé selon l'une quelconque des revendications 9 - 11, **caractérisé par** l'utilisation d'un appareil d'ajustement (9) sous la forme d'un combiné fonctionnant avec des piles ou des accus.
